# EUROPÄISCHE PATENTANMELDUNG

(11) **EP 0 949 058 A2**
(43) Veröffentlichungstag der Anmeldung: **13.10.1999**
(21) Anmeldenummer: 99106180.5
(22) Anmeldetag: 08.04.1999
(51) Int. Cl.: B29C 70/20, B29C 70/52

(54) **Faserverstärkter Kunststofformkörper und Verfahren zu seiner Herstellung**

(30) Priorität: 08.04.1998 DE 19815783
(71) Anmelder: Schock & Co. GmbH, D-73614 Schorndorf (DE)
(72) Erfinder: Schock, Karl, 73614 Schorndorf (DE); Hieber, Gunter, 73614 Schorndorf (DE); Kohler, Robert, 72116 Mössingen (DE); Barthold, Peter, 72406 Bisingen (DE); Ankele, Rainer, 72779 Reutlingen/Ohm. (DE)
(74) Vertreter: Hoeger, Stellrecht & Partner

(57) **Zusammenfassung**

Um faserverstärkte Kunststofformkörper unter Verwendung von endlich langen Naturfasern herzustellen, die sehr hohe Festigkeiten und Steifigkeiten sowie eine weitestgehend homogene Faserverteilung aufweisen und somit auch für hochwertige Anwendungen geeignet sind, wird vorgeschlagen, daß die Formkörper durch die Naturfasern unidirektional verstärkt und daß die Naturfasern parallelisierte Fasern in Strang- oder Bänderform sind.

## Beschreibung

Die Erfindung betrifft einen faserverstärkten Kunststofformkörper mit einer mit pflanzlichen Naturfasern verstärkten Kunststoffmatrix.

Verstärkte Kunststofformkörper, welche in der Kunststoffmatrix eingelagerte Verstärkungsfasern aufweisen, sind im Stand der Technik vielfältig bekannt. Durch Zusatz von hochfesten Fasern, wie z. B. Glasfasern, Kohlefasern, Aramidfasern etc., läßt sich das Eigenschaftsprofil von Kunststoffen beträchtlich und gezielt verbessern.

Durch die Verstärkung der Kunststoffe erhält man hochfeste Materialien, die darüber hinaus aufgrund ihres Gewichtsvorteiles metallische Werkstoffe in vielen Bereichen verdrängt haben. Weitere Vorteile der faserverstärkten Kunststoffe gegenüber den metallischen Werkstoffen sind deren höhere Korrosionsbeständigkeit speziell in sauren oder alkalischen Medien.

Aus faserverstärkten Kunststoffen lassen sich Formteile in komplexen Geometrien herstellen, während dies mit metallischen Werkstoffen oft nur unter einem hohen Kostenaufwand möglich ist.

Die Verwendung von Kohlefasern und Aramidfasern erschließt aufgrund der damit verbundenen hohen Materialkosten allerdings nur ein begrenztes Feld technischer Anwendungen. Dagegen sind glasfaserverstärkte Kunststoffe weit verbreitet. Allerdings ist die Bearbeitung dieser Werkstoffe nicht unproblematisch aufgrund des hohen Werkzeugverschleißes, bedingt durch die Abrasivität der Glasfasern sowie der Toxizität der anfallenden Stäube.

Grundsätzlich können faserverstärkte Kunststoffe in zwei Klassen eingeteilt werden:
- faserverstärkte thermoplastische Werkstoffe, bei denen die Fasern in eine Kunststoffschmelze eingearbeitet werden und das Material im Spritzguß- oder Extrusionsverfahren weiterverarbeitet wird;
- faserverstärkte duroplastische Werkstoffe, bei denen die Fasern in Flüssigharze eingemischt werden oder Faserstrukturen direkt mit einem Bindeharz getränkt werden mit anschließender Aushärtung der Masse der Flüssig-/Bindeharze.

Obwohl die reinen Fasereigenschaften von Naturfasern, wie z. B. Flachs, in puncto Zugfestigkeit und Zug-E-Modul mit Glasfasern vergleichbar sind, entfalten die Naturfasern im Verbundwerkstoff nicht ihr volles Potential. Der Einsatz von Naturfasern nach dem bisherigen Entwicklungsstand ist im wesentlichen limitiert auf mechanisch weniger beanspruchte Anwendungen, z. B. Hutablagen und Türinnenverkleidungen im Kfz-Innenbereich, verrottbare Pflanzentöpfe etc., bei denen diese Nachteile gegenüber Glasfaserverbunden akzeptiert werden können.

Es wurde schon labormäßig versucht naturfaserverstärkte Kunststoffe mit unterschiedlichen Matrixmaterialien herzustellen. Als thermoplastische Matrix wurde dabei vorzugsweise Polypropylen in Betracht gezogen, da bei dessen Verarbeitungstemperaturen die Naturfaser nicht geschädigt wird.

Eine große Schwierigkeit bei der technischen Verarbeitung der Naturfasern besteht darin, daß diese, im Gegensatz zu synthetischen Fasern wie Glas, Carbon, Aramid etc. nicht in endloser Form vorliegen. Ein noch schwerwiegenderes Problem bildet die Tatsache, daß die Naturfasern die Tendenz haben, aneinander zu haften und miteinander zu verspinnen. Aus diesem Grunde sind sie nicht oder nur sehr schlecht rieselfähig, mit der Folge, daß lange Fasern in loser Form bisher nicht direkt verarbeitet werden.

Bei den bisher bekanntgewordenen Verfahren zur Herstellung von Naturfaserverbundwerkstoffen handelt es sich daher einerseits um den Einsatz von sehr kurzen Fasern mit einer Länge von einigen Millimetern. Diese werden z. B. durch bekannte Compoundierverfahren wie Kneten oder Mischextrusion in thermoplastische Matrices eingemischt. Die Faservereinzelung und Homogenisierung erfolgt dabei durch hohe Scherkräfte. Das erhaltene Compound wird granuliert und für Spritzguß oder Strangextrusion verwendet.

Die zweite bisher ausschließlich beschriebene und praktizierte Möglichkeit zur Verwendung von langen Naturfasern im Längenbereich zwischen 5 und 150 mm ist der Einsatz von Vliesstoffen, die auf Karden, Krempeln oder durch Naßvliesverfahren hergestellt werden. Beim Naßvliesverfahren ist die Faserlänge auf ca. 5 - 15 mm beschränkt. Vliesstoffe mit größeren Faserlängen können nur durch Trockenlegung, d. h. durch Krempeln bzw. durch aerodynamische Verfahren hergestellt werden.

Die nach dem Stand der Technik üblicherweise verwendeten Vliesstoffe sind nach solchen Trockenverfahren hergestellt und haben, je nach Herstellprozeß, eine weitgehend isotrope Anordnung der Fasern. Hinzu kommt sogar eine Orientierung der Fasern senkrecht zur Fläche, da die Vliese für ihre technische Handhabbarkeit durch Nadeln verfestigt werden müssen. Bei Krempelvliesen ist eine gewisse Faserorientierung möglich, jedoch können Orientierungsgrade, bewertet anhand des Festigkeitsverhältnisses längs zu quer, von mehr als ca. 5:1 nur schwer hergestellt werden, da mit zunehmendem Ausrichtungsgrad der Zusammenhalt des Faservlieses stark abnimmt.

Ein großer Nachteil der Vliesstoffe ist ihre Inhomogenität, d. h. örtliche Schwankungen ihres Fasergehaltes, die zu inhomogenen Festigkeitseigenschaften führt. Die Inhomogenität kann zwar durch Übereinanderlegen von mehreren Lagen verringert, jedoch nicht völlig ausgeschaltet werden.

Zur Herstellung von thermoplastischen Verbundwerkstoffen können diese Naturfaser-Vliesstoffe in Schmelzen eingebettet werden oder es werden bereits bei der Herstellung der Vliesstoffe Thermoplastfasern mit eingearbeitet, die durch Heißpressen verfestigt werden. Nachteilig bei der Herstellung von Naturfaserverbunden in Thermoplasten ist deren hohe Viskosität, die eine gute Faserbenetzung erschwert. Aus diesem Grund sind entweder hohe Scherkräfte erforderlich, wie bei der Kurzfaser-Compoundierung, oder relativ offene Faservliese, wie sie nur mit groben Fasern darstellbar sind.

Die Verwendung von duroplastischen Matrix-Kunststoffen hat den Vorteil einer sehr guten Faserbenetzung aufgrund der niedrigen Viskosität der Ausgangsprodukte. Auch in diesem Bereich ist bisher nur die Verwendung von vorgefertigten Faservliesen bekannt.

Wegen der weitgehend isotropen Faseranordnung der Vliesstoffe sind die erzielbaren Festigkeitseigenschaften der Verbundwerkstoffe begrenzt, da in Beanspruchungsrichtung immer nur ein Bruchteil der Fasern zur Wirkung kommt. Aus dem Bereich der Hochleistungs-Verbundwerkstoffe mit Synthesefasern ist bekannt, daß durch gezielte Orientierung von Endlos-Fasern in Richtung der Beanspruchungskräfte erheblich höhere Festigkeiten erreicht werden können. Entsprechende Verfahren unter Verwendung von Naturfasern mit ihrer begrenzten Faserlänge sind aus den oben beschriebenen Gründen bisher nicht bekannt geworden.

Aufgabe der Erfindung ist es daher, faserverstärkte Kunststofformkörper unter Verwendung von endlich langen Naturfasern herzustellen, die sehr hohe Festigkeiten und Steifigkeiten sowie eine weitestgehend homogene Faserverteilung aufweisen und somit auch für hochwertige Anwendungen geeignet sind.

Diese Aufgabe wird erfindungsgemäß dadurch gelöst, daß der Formkörper durch die Naturfasern unidirektional verstärkt ist und daß die Naturfasern parallelisierte Fasern in Strang- oder Bänderform sind.

Erstaunlicherweise lassen sich parallelisierte Naturfasern von begrenzter Länge, auch in einem Aggregatszustand, in dem sie nur eine geringe Zugfestigkeit in ihrer Strang- oder Bänderform aufweisen, sehr gut handhaben und sehr gut zum unidirektionalen Verstärken von Formkörpern einsetzen.

Insbesondere ist zu beachten, daß bei den parallelisierten Fasern in Strang- oder Bänderform auch sehr feine Fasern eine noch ausreichend lockere Faserstruktur ermöglichen, die somit leicht von dem die Kunststoffmatrix bildenden Material benetzt und durchdrungen werden kann. Dadurch ergeben sich sehr hohe Kontaktflächen und damit eine gute Verhaftung zwischen den Naturfaseroberflächen und der Kunststoffmatrix.

Bei einer Ausführungsform der Erfindung werden die Fasern als sogenanntes Langfaser-Vorgarn verwendet, welches vorzugsweise in geringem Umfang, d. h. im Bereich zwischen 10 und 30 Drehungen pro Meter, gedreht ist. Diese Anzahl von Drehungen reicht aus, um diesem Vorgarn eine Festigkeit von > 8 cN/tex bei einer Einspannlänge von 300 mm zu verleihen. Andererseits ist der Faserverbund noch lose genug, um eine im wesentlichen allseitige Benetzung der Fasern durch das die Matrix bildende Material zuzulassen.

Vorgarne, wie sie z. B. als Zwischenstufe zur Herstellung von textilen Leinenartikeln verwendet werden, sind ein qualitativ hochwertiges Naturfaserprodukt mit einer mittleren Faserlänge größer 100 mm. Günstige Feinheitsbereiche für die Vorgarne liegen beispielsweise im Bereich von 200 bis 1200 tex, weiter bevorzugt im Bereich von 400 bis 800 tex. Je nach Einsatzzweck wird die Zahl der verwendeten Vorgarnstränge angepaßt, um den gewünschten Verstärkungseffekt zu erzielen. Betrachtet man den Faseranteil im Querschnitt von einem cm² des Kunststofformkörpers, so wird ein Faseranteil von 45 bis 70 Vol.% bevorzugt. Ein solcher Faseranteil läßt sich beispielsweise mit einer Anzahl von 75 bis 300 Vorgarnsträngen auf den Querschnitt von einem cm² realisieren.

Alternativ hierzu können auch die wesentlich preisgünstigeren Hechelbänder oder Kurzfaser-Kardenbänder verwendet werden. Beim Hechelband liegt die mittlere Faserlänge ebenfalls oberhalb von 100 mm, und hier empfiehlt sich der Einsatz von beispielsweise bis zu 4 Hechelbändern mit je 30 000 tex pro cm² Querschnitt des Formkörpers.

Das Kurzfaserkardenband, welches eine mittlere Faserlänge > 20 mm bis 50 mm aufweist, ist eine ebenfalls preisgünstige Alternative zu dem Langfaser-Vorgarn. Beim Einsatz werden 10 bis 25 Bänder mit einem Titer von 3 000 bis 8 000 tex pro cm² Querschnittfläche des Formkörpers verwendet.

Die Herstellung der erfindungsgemäßen Formkörper erfolgt bevorzugt mittels Pultrusion. Bei der Verarbeitung ist allerdings zu beachten, daß die Zuführung und Gestaltung der Einführungszone des Werkzeugs, insbesondere bei der Pultrusion, so ausgelegt sind, daß die Hechelbänder und Kardenbänder mit ihrer relativ geringen Bandfestigkeit kontinuierlich verarbeitet werden können und nicht abreißen.

Als weitere Alternative lassen sich Strangmaterialien mit einer Art Kern-Hülle-Struktur verwenden, wobei die Hülle Langfasern umfaßt und der Kern kurzfaserige Naturfasern umfaßt, wobei die Hülle auch offene Gewebe umfassen kann. Vorzugsweise wird die Hülle des Kern-Hülle-Strukturfaserstrangs überwiegend aus Langfasern und der Kern im wesentlichen aus Kurzfasern gebildet werden. Selbstverständlich kann der Kern auch einen Anteil an Langfasern enthalten. Die Langfasern können nicht nur von Naturfasern gebildet werden, sondern auch durch synthetische Filamente. Hier kommen dann Langfasern bevorzugt in Form von Endlosfilamenten zum Einsatz.

Als pflanzliche Naturfasern kommen insbesondere Bast- und/oder Blattfasern in Betracht, wobei die Quellen hierfür Hanf, Flachs, Ramie, Jute, Sisal, Banane und andere Pflanzen sind.

Die verwendeten Fasern sind insbesondere feine, gleichmäßige Naturfasern aus Cellulose, d. h. bevorzugt Flachsfasern in allen Erscheinungsformen, insbesondere Röstflachs und dampf- bzw. tensidaufgeschlossener Flachs. Aufgrund eines günstigen Preis-Leistungsverhältnisses wird bevorzugt Röstflachs verwendet. Röstflachs enthält auch ohne chemische Aufbereitung bereits einen hohen Anteil von feinen Einzelfasern. Je nach den Produktanforderungen und dem Preis können anstelle von Röstflachs jedoch auch Grünflachs, Hanf und alle anderen Varianten von Cellulosefasern eingesetzt werden. In der Aufarbeitung wird ein Vorgarn gebildet und dieses bevorzugt mit 20 Drehungen pro Meter versehen. Die Faserfeuchtigkeit kann im Bereich von 2,0 bis 7,0 Gew.% liegen, bevorzugt bei 5,0 Gew.%.

Für hochwertige Produkte werden die Naturfasern vorzugsweise in vorbehandelter Form verwendet, wobei hier eine mechanische, chemische oder Dampfdruckaufschlußvorbehandlung vorstellbar ist. Ziel der Vorbehandlung ist die Beseitigung von Begleitsubstanzen der Naturfasern, wie z. B. Hemicellulosen, Pektin, Lignin, und die Erzielung einer maximalen Faserfeinheit bzw. einer engen Feinheitsverteilung.

Als weitere Vorbehandlungen für hochwertige Produkte kommen auch spezielle chemische Vorbehandlungen oder Ausrüstungen in Frage, z. B. alkalisch abgekochte, gebleichte, vernetzte oder für bestimmte Anforderungen imprägnierte oder beschichtete Fasern.

Die Parallelisierung der Naturfasern läßt sich durch textile Methoden analog den Spinnereivorstufen, wie Hecheln, Krempeln, Kardieren, Strecken etc. bewirken.

Je nach Art der verwendeten Kunststoffmatrix empfiehlt es sich, die Naturfasern mit einem Haftvermittler zu behandeln, wenn diese in die Kunststoffmatrix eingearbeitet werden. Geeignete Haftvermittler sind beispielsweise Isocyanatverbindungen, organische Titanate und Silane.

Aus wirtschaftlichen Gründen empfiehlt es sich, den Haftvermittler dem Bindemittel Zuzugeben.

Im Falle der Verwendung von Silanen als Haftvermittler empfiehlt es sich, den Haftvermittler vor dem Tränken der Fasern mit Bindemittel mit den Fasern zur Reaktion zu bringen. Organische Titanate können diese Reaktion begünstigen.

Erstaunlicherweise hat sich herausgestellt, daß mit Haftvermittlern, insbesondere den oben erwähnten Typen, behandelte Naturfasern auf pflanzlicher Basis beträchtlich verminderte Wasseraufnahmefähigkeiten besitzen, d. h. die häufig bei mit Naturfasern verstärkten Kunststoffen beobachteten Probleme der Wasseraufnahme bei der 24-Stunden-Wasserlagerung lassen sich durch die Verwendung von Haftvermittlern an der Faseroberfläche beträchtlich zurückdrängen. Statt einer Wasseraufnahme von 15 % und mehr kann die Wasseraufnahme bei den erfindungsgemäß behandelten Naturfasern auf weniger als 6 Gew.% bei diesem vorerwähnten 24-Stunden-Test zurückgedrängt werden.

Die wichtigste Eigenschaft der erfindungsgemäßen Formkörper ist ihre mechanische Festigkeit und Steifigkeit. Überraschenderweise hat sich gezeigt, daß die mechanischen Eigenschaften durch Haftvermittler auf Basis von Titanaten und insbesondere mit Mischungen aus Titanaten und Silanen außerordentlich verbessert werden können.

Titanat und Titanat/Silan-Haftvermittler senken die Wasseraufnahme nicht ganz so stark wie Isocyanate und Silane allein. Entscheidend für die Eigenschaften der Formkörper ist jedoch nicht nur deren gewichtsmäßige Wasseraufnahme, sondern vor allem die Veränderung der Festigkeiten durch den Wassereinfluß. Trotz geringfügig höherer Wasseraufnahme behalten die mit Titanat/Silan ausgerüsteten Fasern bei Wasserlagerung eine höhere Festigkeit.

Der Naturfaseranteil sollte in der Regel mehr als 45 Vol.% betragen, wobei sehr viel höhere Anteile möglich sind. Keine Probleme bereiten beispielsweise Naturfaseranteile von 65 Vol.% und mehr.

Besonders bevorzugte Formkörper sind solche, bei denen die Kunststoffmatrix aus einem radikalisch polymerisierten Bindemittel gebildet ist und der Haftvermittler eine Verbindung der allgemeinen Formel (I):

X - NCO (I)

Hierin bedeutet X eine Gruppe, welche eine radikalisch polymerisierbare Gruppe beinhaltet.

Die Isocyanatgruppe der Verbindung der allgemeinen Formel (I) ist in der Lage, mit den OH-Gruppen der Cellulosestruktur der Naturfasern eine chemische Bindung einzugehen, während die Gruppe X mit ihrer radikalisch polymerisierbaren funktionellen Gruppe direkt in das radikalisch polymerisierbare Bindemittel einpolymerisierbar ist. Dadurch ergibt sich eine besonders gute Haftung der Matrix an den Faseroberflächen. Nicht nur die Haftung wird durch diese Art der Haftvermittlung zwischen der Oberfläche der Naturfasern und der Kunststoffmatrix verbessert, sondern auch die Wasseraufnahmefähigkeit des verstärkten Kunststofformkörpers wird drastisch zurückgedrängt.

Bevorzugt ist hierbei, daß die Gruppe X eine ethylenisch ungesättigte funktionelle Gruppe umfaßt. Diese Gruppe wird vorzugsweise ausgewählt aus der Gruppe der (Meth-)Acrylatgruppen. Ein besonders bevorzugtes Beispiel der Haftvermittler stammt aus der Reaktion einer Methacrylsäure-ω-Hydroxyl-Alkylesterverbindung mit einem di-, tri- oder polyfunktionellen Isocyanat, wobei die Alkylgruppe des Alkylesters eine C1- bis C6-Alkylgruppe ist.

Das zur Bildung des Reaktionsprodukts eingesetzte Isocyanat ist bevorzugt ein Hexamethylendiisocyanat und Toluoldiisocyanat.

Alternative, sehr gut wirkende Haftvermittler sind Silane mit radikalisch polymerisierbaren, ethylenisch ungesättigten Gruppen, wie z. B. Trimethoxysilane mit Acryl- oder Methacrylestergruppen.

Dieser Haftvermittler wird vorzugsweise in Konzentrationen von ca. 0,2 bis 5 Gew.% bezogen auf die Fasermenge in einem Gemisch aus Wasser und einem Lösemittel (vorzugsweise Ethanol) unter Hydrolyse gelöst. Durch Zugabe von Essigsäure als Hydrolysekatalysator wird der pH-Wert auf 4,5 eingestellt (ein Bereich von pH 3,5 bis 5,5 ist möglich). Die wässrige Silanlösung wird durch Sprühen auf das zu behandelnde Fasersubstrat aufgebracht. Eine Trocknung der behandelten Fasern erfolgt bei ca. 80 bis 120 °C. Die Biegesteifigkeit, gemessen an einem stabförmigen Formkörper mit 100 Strängen (62 000 tex) beträgt im unbehandelten Zustand 217 N/mm², der zugehörige Biegemodul ergibt sich mit 19 500 N/mm² (vgl. Beispiel 1).

Die Verwendung derselben 100 Stränge (vgl. Beispiel 7), behandelt mit einer 2 gew.%igen 3-Methacryloxypropyl-trimethoxysilan(Memo)-Lösung läßt die Biegesteifigkeit des Formkörpers auf 235 N/mm² ansteigen, der Biege-E-Modul steigt auf 19 700 N/mm².

Die Silan-Haftvermittler lassen sich bervorzugt in Kombination mit Urethanacrylatharzen als Bindemittel einsetzen. Dagegen eignen sich die Isocyanathaftvermittler besser für den Einsatz mit reinen Acrylatharzen bzw. Polyesterharzen.

Das bislang noch nicht im einzelnen angesprochene Bindemittel ist vorzugsweise ein acrylatbasierendes, vorzugsweise ein auf MMA/PMMA basierendes oder ein auf einem funktionalisierten Acrylat, wie z. B. ein Urethanacrylat, basierendes Bindemittel. Die Acrylatbindemittel weisen als Besonderheit eine niedrige Viskosität, eine gute Benetzung und eine gute Adhäsion an den Naturfasern auf. Durch die niedrige Viskosität wird eine gute Durchdringung der vorgelegten Naturfaserstränge bzw. Bänder erreicht und damit eine großflächige Benetzung der Faseroberfläche.

Beispielsweise kann mit einem 47 Vol.%-Anteil von Flachsfasern in einer Acrylatmatrix eine Biegefestigkeit bei unidirektionaler Ausrichtung der Fasern von mehr als 200 N/mm² erzielt werden und einen Biege-E-Modul > 19 000 N/mm².

Bei einem Volumenanteil der Flachsfasern von 59 Vol.% (vgl. Beispiel 6) erhöht sich die Biegefestigkeit bereits auf mehr als 300 N/mm², und der Biege-E-Modul ergibt sich größer als 30 000 N/mm².

Bei weiteren bevorzugten Ausführungsformen der Erfindung weist der Formkörper in der Kunststoffmatrix eingelagerte partikelförmige, anorganische Füllstoffe auf. Diese Füllstoffe lassen sich zur weiteren Modifikation von Materialeigenschaften der Formkörper einsetzen. Bei der Bildung des Acrylatbindemittels wird vorzugsweise ein Sirup aus MMA und PMMA verwendet, dessen PMMA-Gehalt 10 bis 40 Gew.% beträgt. Insbesondere wird der PMMA-Gehalt so ausgewählt, daß die Viskosität des dadurch gebildeten Bindemittels im Bereich von 50 bis 800 mPa·sec beträgt.

Eine besonders bevorzugte Herstellungsart der erfindungsgemäßen Formkörper ist die Pultrusion. Erstaunlicherweise läßt sich das Pultrusionsverfahren auch für solche Formkörper anwenden, bei denen nicht das relativ feste Vorgarn als Naturfaserrohmaterial verwendet wird, sondern die wesentlich weniger zugfesten Hechel- und Kardenbänder.

Aufgrund der oben erläuterten für naturfaserverstärkte Acrylate bisher unerreichten Festigkeiten, die mit den unidirektional verstärkten Formkörpern erzielbar sind, sowie deren größerer Homogenität erschließen sich die erfindungsgemäßen Formkörper auch höherwertigen Anwendungen. Gleichzeitig erhält man aufgrund der Verwendung von Naturfasern als Verstärkungsmaterialien eine leichtere Bearbeitbarkeit der Formköper im Vergleich zu glasfaserverstärkten Kunststoffen aufgrund der wesentlich geringeren Abrasivität der Naturfasern. Ferner wird ein geringeres Gewicht der Verbundwerkstoffe erzielt aufgrund der geringeren Dichte der Naturfasern (ca. 1,5 g/cm³) gegenüber der Dichte der Glasfaser (von 2,4 bis 2,7 g/cm³).

Ferner erlaubt die Verwendung von Naturfasern als Verstärkungsstoffen eine rückstandsfreie thermische Verwertung der verstärkten Kunststoffe. Die Toxizität der Glasfaserstäube entfällt.

Im folgenden sei an einem Beispiel die Pultrusion eines unidirektional verstärkten Flachsfaserverbundes erläutert, wobei folgende Ausgangsstoffe verwendet werden:

Als Naturfasernstrang wird ein Vorgarn bestehend aus hochwertigen Flachslangfasern mit einer mittleren Faserlänge von > 100 mm verwendet. Das Vorgarn wird leicht verdrillt und weist ca. 20 Drehungen pro Meter auf. Die dadurch erzielte Reißfestigkeit liegt oberhalb von 8 cN/tex. Gleichzeitig bleibt die Durchtränkbarkeit der Faser mit dem Bindeharz gewährleistet.

Alternativ zu dem hochwertigen Vorgarn aus Flachs, welches, wie bereits oben ausgeführt, relativ teuer ist, kann eine Mischung aus Vorgarn und preisgünstigeren Flachskurzfasern (Kurzfaseranteil von 30 bis 80 Gew.%, bevorzugt ca. 50 Gew.%) verwendet werden. Zur weiteren Stabilisierung der Naturfaserstränge können auch (wie erwähnt) Synthesefasern eingesetzt werden, wobei sich hier Anteile im Bereich von 5 bis 30 Gew.% Synthesefasern, vorzugsweise ca. 20 Gew.% empfehlen. Auch Glasfasern können in den oben angegebenen Bereichen zur Stabilisierung des Stranges aus Naturfasern eingesetzt werden.

Die beobachtete Reißfestigkeit des Naturfaserstranges, dem Synthesefasern oder Glasfasern zugemischt sind, wird im wesentlichen durch die Festigkeit der Synthese- oder Glasfasern gewährleistet. Im Falle der Verwendung einer Mischung von Langfaservorgarn mit Kurzfasern durch das Langfaservorgarn. Bei der Pultrusion wird für die Versuche typischerweise als Probe ein Rechteckstab mit dem Querschnitt von 1 cm² hergestellt. Ein Bündel aus Vorgarn wird zuerst durch ein Harzbad gezogen und getränkt, danach wird es zuerst in einer konischen Einzugszone in Form gebracht und verdichtet. Die Polymerisation erfolgt in der Heizzone des Pultrusionswerkzeuges. Als Bindeharz wird bevorzugt ein Urethanacrylat (Modar 826 HT der Ashland Chemie) verwendet, mit einem Feststoffgehalt von 30 bis 65 Gew.%, bevorzugt 50 Gew. % Urethanacrylat-Präpolymer. Die Polymerisation wird durch thermische Initiierung eingeleitet, wobei Peroxide als Polymerisationskatalysatoren verwendet werden. Insbesondere wird ein zwei- oder dreistufiges Peroxidsystem bevorzugt, wobei hier bevorzugte Peroxide BCHPC (Di-4t-Butylcyclohexyl)-peroxidicarbonat), LP (Dilauroylperoxid) und/oder TBPB (t-Butyl-peroxibenzoat) zum Einsatz kommen. Die verwendeten Konzentrationen von BCHPC liegen bei 0,7 bis 2,0 Gew.%, bevorzugt bei 1,4 Gew.%. Bei dem Peroxid TBPB liegt der Anteil bei 1,0 bis 3,0 Gew.%, bevorzugt bei 2,0 Gew.%. Bei dem LP-Initiator liegt der Anteil bei 0,8 bis 1,5 Gew.%, bevorzugt bei 1,2 Gew%.

Die Erfindung betrifft ferner ein Verfahren zur Herstellung faserverstärkter Kunststofformkörper mit einer mit pflanzlichen Naturfasern verstärkten, von einem Bindemittel gebildeten duroplastischen Kunststoffmatrix, wobei der Formkörper in einem Formgebungs- und Aushärteschritt aus mit dem Bindemittel getränkten parallelisierten Naturfasern in Strang- oder Bänderform gebildet wird.

Besonders geeignet sind hierfür Verfahren, die den Formgebungs- und Aushärteschritt im Pultrusionsverfahren durchführen, wel-ches insbesondere zur Herstellung von Endlosformkörpern in einer kontinuierlichen Verfahrensweise geeignet ist. Daneben können damit auch Formkörper mit diskreter Gestalt diskontinuierlich gefertigt werden.

Vorzugsweise werden die Naturfasern mit einem Haftvermittler behandelt, wobei dies vor dem Tränken der Naturfasern mit Bindemittel geschehen kann oder aber auch derart, daß der Haftvemittler dem Bindemittel beigegeben wird, so daß die Behandlung mit Bindemittel in situ beim Tränken der Naturfasern vollzogen wird. Geeignete Haftvermittler sind Isocyanatverbindungen, Silane, organisches Titanat oder Mischungen hieraus.

Besonders bevorzugt sind Silane, die mit den Naturfasern zur Reaktion gebracht werden können, da diese gleichzeitig die Wasseraufnahmefähigkeit der Naturfasern besonders effektiv zu vermindern vermögen. Dadurch erschließen sich solchen Formkörpern Anwendungsgebiete, die den naturfaserverstärkten Kunststoffen bislang verschlossen waren.

### Beispiele

Vorgehensweise zur Herstellung eines Formkörpers mit weitgehend parallelisierter, unidirektionaler Faserverteilung:

Ein Bündel aus einem Leinen-Vorgarn wird in der Versuchsanordnung durch ein Bindemittel-Tränkbad (Bindemittelviskosität bevorzugt 100 bis 200 mPa*s) gezogen und anschließend durch ein Pultrusionswerkzeug, wobei ein Rechteckstab eines Querschnitts von 1 cm² (10 x 10 mm) hergestellt wird.

Die Länge der Einzugszone des Pultrusionswerkzeugs beträgt 12 cm, die der Heizzone 40 cm, wobei die Temperatur auf 130 °C eingestellt wird.

Die Verarbeitungsgeschwindigkeit beträgt 0,2 m/min.

### Beispiel 1:

| | |
|---|---|
| Leinen-Vorgarn: | 100 Stränge, 62 000 tex |
| Fasergehalt: | 47 Vol.% |
| Harzrezeptur: | 100,0 Teile Urethanacrylat Modar 826 HT; Viskosität 135 mPa*s |
| | (Hersteller: Ashland Südchemie-Kernfest GmbH, Hilden) |
| | 0,2 Teile Trennmittel Stearinsäure |
| | 1,4 Teile BCHPC |
| | 2,0 Teile TBPB |

### Beispiel 2:

| | |
|---|---|
| Leinen-Vorgarn: | 100 Stränge, 62 000 tex |
| Fasergehalt: | 47 Vol.% |
| Harzrezeptur: | 100,0 Teile Acrylsirup mit Feststoffanteil von 20 % PMMA Viskosität 100 mPa*s |
| | 3 Teile TRIM (Trimethylolpropantrimethacrylat) |
| | 0,4 Teile BCHPC |
| | 0,8 Teile LP |

### Beispiel 3:

| | |
|---|---|
| Leinen-Vorgarn: | 100 Stränge, 62 000 tex |
| Fasergehalt: | 47 Vol.% |
| Harzrezeptur: | Polyester Alpolit UP 303; Viskosität ca. 300 mPa*s (Lange und Ritter, Gerlingen) |

### Vergleichsbeispiele:

Vorgehensweise zur Herstellung eines Formkörpers mit weitgehend isotroper Faserverteilung:

Ein isotropes Krempelvlies bestehend aus Röstflachsfasern (Fa. Holstein Flachs) der Länge von 15 mm werden in eine beheizbare Metallform eingelegt und mit ca. 320 g Bindeharz (s. Rezeptur) übergossen.

Die Polymerisation wird unter einem Druck von 5 bar und einer Temperatur von 115 °C ausgeführt. Reaktionszeit: 45 min.

### Vergleichsbeispiel 4:

| | |
|---|---|
| Vlies: | 15 Vlieslagen Krempelvlies (76 g/m²) → 220 g |
| Fasergehalt: | 47 Vol.% |
| Harzrezeptur: | 320 g Urethanacrylat Modar 826 HT; |
| | Viskosität 135 mPa*s |
| | (Hersteller: Ashland Südchemie-Kernfest GmbH, Hilden) |
| | 0,64 g BCHPC |
| | 1,26 g LP |

### Vegleichsbeispiel 5:

| | |
|---|---|
| Vlies: | 15 Vlieslagen Krempelvlies (76 g/m²) → 220 g |
| Fasergehalt: | 47 Vol.% |
| Harzrezeptur: | 320 g Acrylsirup mit Feststoffanteil von 20 % PMMA |
| | Viskosität 100 mPa*s |
| | 9,6 g TRIM (Trimethylolpropantrimethacrylat) |
| | 0,64 g BCHPC |
| | 1,26 g LP |

### Einfluß der unidirektionalen Faserorientierung:

Der Fasergehalt beträgt in allen Fällen 47 Vol.%.

| (Vergleichs-) Beispiel | Harzmatrix / Orientierung | Biegefestigkeit (MPa) | Biege-E-Modul (MPa) |
|---|---|---|---|
| 1 | Modar unidirektional | 217 | 19 500 |
| 4 | Modar isotrop | 160 | 12 500 |
| 2 | Standard-Acrylat unidirektional | 172 | 20 000 |
| 5 | Standard-Acrylat isotrop | 129 | 9 700 |
| 3 | Alpolit unidirektional | 244 | 22 200 |

### Beispiel 6:

Ein parallelisiertes Faserbündel mit 82 000 tex (Langfaser-Vorgarn) wird wie in Beispiel 1 beschrieben zu einem Pultrusions-Formkörper verarbeitet. Der Volumenanteil an Fasern beträgt 59 %. Der Formkörper hat eine Biegefestigkeit von 300 MPa und einen Biege-E-Modul von 30 000 MPa.

### Beispiel 7:

Faserbündel mit parallelisierten Fasern und einer Stärke von 62 000 tex (Langfaser-Vorgarn) werden mit unterschiedlichen Mengen an Silan-Haftvermittler (Typ Dynasilan MEMO, Fa. Sivento, Düsseldorf) durch Besprühen ausgerüstet. Danach wird wie in Beispiel 1 mit Modar-Harz imprägniert und durch Pultrusion ein Stab mit 1 cm² Querschnitt geformt. Der Volumenanteil der Fasern beträgt 47 %.

Es werden folgende Festigkeitswerte erzielt:

| Haftvermittler | Biegefestigkeit (MPa) | Biege-E-Modul (MPa) |
|---|---|---|
| unbehandelt | 217 | 19 500 |
| 1 | 225 | 19 600 |
| 2 | 235 | 19 700 |

### Beispiel 8:

Parallelisierte Faserbündel wie in Beispiel 7 werden unbehandelt bzw. mit verschiedenen Haftvermittlern ausgerüstet zu unidirektional verstärkten Formkörpern mit 47 Vol.% Fasergehalt verarbeitet. Die Wasseraufnahme nach 24 h Lagerung in destilliertem Wasser bei 20 °C ergibt sich wie folgt:

| Haftvermittler (% bez. auf Fasergewicht) | Wasseraufnahme (Gew.%) |
|---|---|
| unbehandelt | 11 |
| MEMO (0,5 %) | 4,4 |
| Isocyanat (2 %) | 5,6 |
| Isocyanat (5 %) | 5,0 |
| Glycidylester (2 %) | 4,5 |
| (Dynasilan Glymo, Fa. Sivento, Düsseldorf) | |

## Patentansprüche

1. Faserverstärkter Kunststofformkörper mit einer mit pflanzlichen Naturfasern verstärkten, von einem Bindemittel gebildeten duroplastischen Kunststoffmatrix, dadurch gekennzeichnet, daß der Formkörper durch die Naturfasern unidirektional verstärkt ist und daß die Naturfasern parallelisierte Fasern in Strang- oder Bänderform sind.

2. Formkörper nach Anspruch 1, dadurch gekennzeichnet, daß die Fasern als Hechelband oder Kardenband vorliegen.

3. Formkörper nach Anspruch 1, dadurch gekennzeichnet, daß die Fasern als Vorgarn vorliegen.

4. Formkörper nach Anspruch 3, dadurch gekennzeichnet, daß das Vorgarn 10 bis 30 Drehungen/m aufweist.

5. Formkörper nach Anspruch 1, dadurch gekennzeichnet, daß die Naturfasern in Strangform vorliegen, wobei der Strang im wesentlichen aus parallelisierten Kurzfasern besteht und zusätzlich Langfasern und/oder Garne zur Aufnahme von Zugkräften enthält.

6. Formkörper nach Anspruch 5, dadurch gekennzeichnet, daß die Langfasern des Strangs in Form von Langfaser-Vorgarn, Spinngarn, Rovings oder Endlosfilamenten vorliegen.

7. Formkörper nach Anspruch 1, dadurch gekennzeichnet, daß die Fasern als Strang mit einer Kern-Hülle-Struktur vorliegen, wobei die Hülle Langfasern und der Kern kurzfaserige Naturfasern umfaßt.

8. Formkörper nach Anspruch 7, dadurch gekennzeichnet, daß die Hülle ein offenes Gewebe umfaßt.

9. Formkörper nach Anspruch 7, dadurch gekennzeichnet, daß die Hülle des Faserstrangs überwiegend aus Langfasern und der Kern im wesentlichen aus Kurzfasern gebildet wird.

10. Formkörper nach einem der Ansprüche 7 bis 9, dadurch gekennzeichnet, daß die Langfasern synthetische Filamente sind.

11. Formkörper nach Anspruch 10, dadurch gekennzeichnet, daß die Langfasern Endlosfilamente sind.

12. Formkörper nach einem der voranstehenden Ansprüche, dadurch gekennzeichnet, daß die Naturfasern mit einem Haftvermittler behandelt sind.

13. Formkörper nach Anspruch 10, dadurch gekennzeichnet, daß der Haftvermittler eine Isocyanatverbindung, ein Silan, organisches Titanat oder Mischungen der vorgenannten Verbindungen umfaßt.

14. Formkörper nach Anspruch 12 oder 13, dadurch gekennzeichnet, daß der Haftvermittler in einer Menge von 0,2 bis 5 Gew.% bezogen auf das Gewicht der Naturfasern zur Behandlung verwendet wird.

15. Kunststofformkörper nach Anspruch 13 oder 14, dadurch gekennzeichnet, daß die Kunststoffmatrix aus einem radikalisch polymerisierten Bindemittel gebildet ist und daß der Haftvermittler eine Verbindung der allgemeinen Formel (I)
X - NCO (I)
umfaßt, worin X eine radikalische polymerisierbare funktionelle Gruppe bedeutet.

16. Formkörper nach Anspruch 15, dadurch gekennzeichnet, daß X eine ethylenisch ungesättigte funktionelle Gruppe umfaßt.

17. Formkörper nach Anspruch 16, dadurch gekennzeichnet, daß die ethylenisch ungesättigte Gruppe eine (Meth-)Acrylatgruppe ist.

18. Formkörper nach Anspruch 17, dadurch gekennzeichnet, daß der Haftvermittler ein Reaktionsprodukt aus einem Methacrylsäure-ω-hydroxy-alkylester und einem di-, tri- oder polyfunktionellen Isocyanat ist, dessen Alkylgruppe eine C₁- bis C₆-Alkylgruppe ist.

19. Formkörper nach Anspruch 18, dadurch gekennzeichnet, daß das Isocyanat ausgewählt ist aus Hexamethylen-diisocyanat und Toluoldiisocyanat.

20. Formkörper nach Anspruch 13, dadurch gekennzeichnet, daß der Haftvermittler aus einer Kombination von Silanen und organischen Titanaten in einem Gewichtsverhältnis von 5:1 bis 1:5, vorzugsweise ca. 1:1 besteht.

21. Formkörper nach einem der Ansprüche 1 bis 20, dadurch gekennzeichnet, daß die Naturfasern Bast- und/oder Blattfasern sind.

22. Formkörper nach einem der Ansprüche 1 bis 21, dadurch gekennzeichnet, daß das Bindemittel ein (meth-)acrylatbasierendes, vorzugsweise ein MMA/PMMA- oder ein Urethanacrylat-basierendes Bindemittel ist.

23. Formkörper nach einem der Ansprüche 1 bis 22, dadurch gekennzeichnet, daß die Kunststoffmatrix partikelförmige anorganische Füllstoffe enthält.

24. Formkörper nach einem der Ansprüche 1 bis 23, dadurch gekennzeichnet, daß die Wasseraufnahme des Formkörpers geringer als 6 Gew.% ist.

25. Formkörper nach einem der Ansprüche 1 bis 24, dadurch gekennzeichnet, daß das Verhältnis des Volumengehalts an Naturfasern zu dem Volumengehalt an Bindemittel ca. 10:90 bis 70:30 beträgt.

26. Formkörper nach Anspruch 22, dadurch gekennzeichnet, daß das acrylatbasierende Bindemittel einen Sirup aus MMA und PMMA umfaßt, wobei der PMMA-Gehalt im Sirup 10 bis 40 Gew.% beträgt.

27. Formkörper nach einem der Ansprüche 22 bis 26, dadurch gekennzeichnet, daß die Bindemittelviskosität 50 bis 800 mPa·s beträgt, bevorzugt 100 bis 200 mPa*s.

28. Verfahren zur Herstellung faserverstärkter Kunststofformkörper mit einer mit pflanzlichen Naturfasern verstärkten, von einem Bindemittel gebildeten duroplastischen Kunststoffmatrix, wobei der Formkörper aus mit dem Bindemittel getränkten parallelisierten Naturfasern in Strang- oder Bänderform in einem Formgebungs- und Aushärteschritt gebildet wird.

29. Verfahren nach Anspruch 28, dadurch gekennzeichnet, daß der Formgebungs- und Aushärteschritt entsprechend einem Pultrusionsverfahren durchgeführt wird.

30. Verfahren nach Anspruch 28 oder 29, dadurch gekennzeichnet, daß die Naturfasern mit einem Haftvermittler behandelt werden.

31. Verfahren nach Anspruch 30, dadurch gekennzeichnet, daß der Haftvermittler eine Isocyanatverbindung, ein Silan, organisches Titanat oder Mischungen der vorgenannten Verbindungen umfaßt.
